# FASCICULE DE BREVET EUROPEEN

(11) **EP 1 809 913 B1**
(45) Date de publication et mention de la délivrance du brevet: **16.07.2008**
(21) Numéro de dépôt: 05819355.8
(22) Date de dépôt: 07.11.2005
(51) Int. Cl.: F16B 5/06

(54) **DISPOSITIF DE FIXATION D'UNE TOILE TENDUE**
VORRICHTUNG ZUR BEFESTIGUNG EINES GESPANNTEN STOFFES
DEVICE FOR FIXING A STRETCHED FABRIC

(30) Priorité: 08.11.2004 FR 0452560
(43) Date de publication de la demande: 25.07.2007
(73) Titulaire: Lapouge, Stéphane, 33500 ARVEYRES (FR)
(72) Inventeur: Lapouge, Stéphane, 33500 ARVEYRES (FR)
(74) Mandataire: Fantin, Laurent
(86) Numéro de dépôt international: PCT/FR2005/050933
(87) Numéro de publication internationale: WO 2006/051236

(56) Documents cités:
- FR-A- 2 840 964

## Description

La présente invention se rapporte à un dispositif de fixation d'une toile tendue.

Il existe de nombreux dispositifs pour fixer une toile tendue ou analogue. Ils comprennent généralement un châssis de forme polygonale, constitué de tronçons rectilignes comportant chacun une rainure dans laquelle est susceptible de s'immobiliser un insert, la toile étant maintenue coincée entre le châssis et l'insert. L'insert est réalisé en matière plastique pour pouvoir avoir les caractéristiques élastiques requises pour son insertion.

Selon un mode de réalisation décrit dans le document DE-2641789, l'insert a une forme en oméga avec d'une part une partie arrondie susceptible d'être insérée en force dans la rainure du châssis et d'y rester immobilisée, et d'autre part des jambes reliées à la partie arrondie de manière à former la base du oméga, susceptibles d'être plaquées contre la face du châssis au niveau de laquelle débouche la rainure. En complément, des moyens de maintien sont prévus, sous forme d'un cylindre susceptible d'être disposé entre les jambes du oméga afin d'éviter leur rapprochement et le retrait de l'insert de la rainure.

Un dispositif de fixation conforme le préambule de la revendication 1 est décrit dans le document FR-3840904.

Les dispositifs de l'art antérieur ne donnent pas pleinement satisfaction pour les raisons suivantes :

Tout d'abord, lors de la mise en place de l'insert, il n'est pas aisé de tendre la toile. Or, la qualité de la fixation dépend essentiellement de la tension de la toile. Par ailleurs, les dispositifs existants ne procurent pas une résistance optimale en raison de leur conception.

Enfin, les inserts sont généralement soumis aux rayons du soleil si bien qu'en raison de la chaleur et des rayons UV ils ont tendance à perdre leurs propriétés élastiques et à ne plus maintenir de manière efficace la toile. Une solution consiste alors à réaliser les inserts à l'aide de matériaux plus élaborés, moins sensibles à la chaleur et aux rayons UV. Toutefois, cette solution aboutit à des produits relativement coûteux.

Aussi, la présente invention vise à pallier les inconvénients de l'art antérieur en proposant un dispositif de fixation de toile procurant une fixation optimale et résistante dans le temps, susceptible de faciliter la tension de la toile.

A cet effet, l'invention a pour objet un dispositif de fixation d'une toile comprenant un châssis de forme polygonale susceptible de recevoir au moins un insert, la toile étant maintenue coincée entre le châssis et l'insert, le châssis comportant une rainure avec une embouchure rétrécie et l'insert comportant un corps en forme de fer à cheval susceptible de se déformer de manière élastique et d'être inséré en force dans la rainure, caractérisé en ce que le corps comprend d'une part, une première paroi délimitant un logement débouchant vers l'extérieur, et d'autre part, une seconde paroi définissant une surface de retenue susceptible de coopérer avec la rainure, un évidement étant ménagé entre les deux parois afin de rendre indépendantes les déformations de chaque paroi, des zones de jonction étant prévues pour relier la première paroi et la seconde paroi de part et d'autre de l'embouchure du logement.

D'autres caractéristiques et avantages ressortiront de la description qui va suivre de l'invention, description donnée à titre d'exemple uniquement, en regard des dessins annexés sur lesquels :
- la figure 1 est une coupe illustrant les différents éléments du dispositif selon l'invention,
- la figure 2 est une vue en perspective d'un exemple de profilé susceptible de constituer le châssis,
- les figures 3A à 3E représentent un synoptique illustrant la mise en oeuvre du dispositif de fixation de la toile selon l'invention, les éléments étant représentés selon une coupe transversale, et
- les figures 4A à 4D représentent un synoptique illustrant la mise en oeuvre du dispositif de fixation de la toile selon l'invention , les éléments étant représentés en vue de dessus.

Le dispositif de fixation d'une toile 10 comprend un châssis 12 de forme polygonale susceptible de recevoir au moins un insert 14, la toile 10 étant maintenue coincée entre le châssis 12 et l'insert 14.

La toile 10 peut avoir différentes formes et natures. Elle n'est pas plus détaillée car elle est à la portée de l'homme du métier.

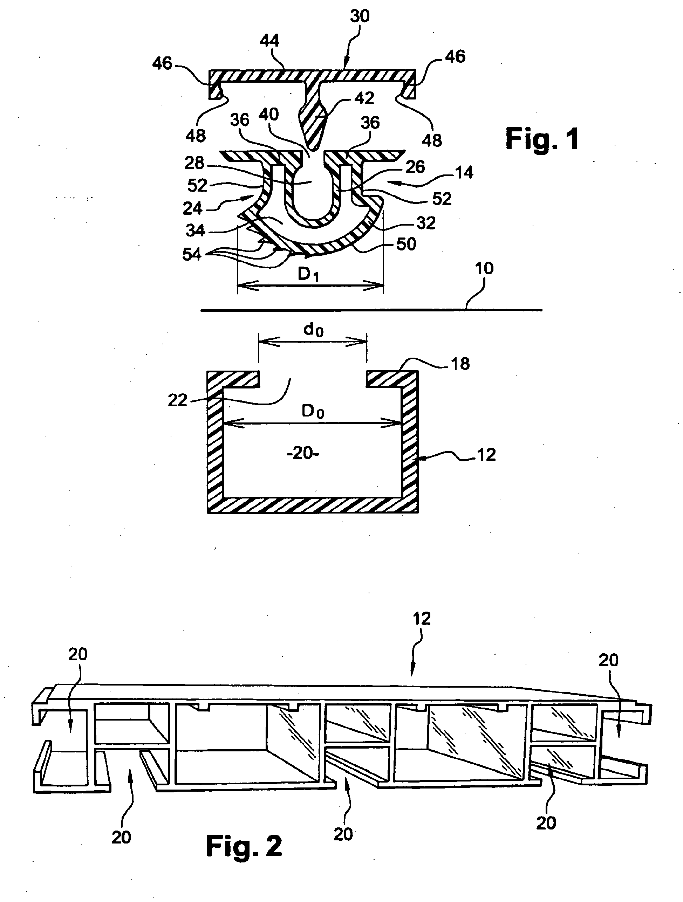

Le châssis 12 est constitué de tronçons rectilignes 16 susceptibles de former un cadre, lesdits tronçons étant réalisés à partir de profilés métalliques, notamment à base d'aluminium, comme illustré à titre d'exemple sur la figure 2.

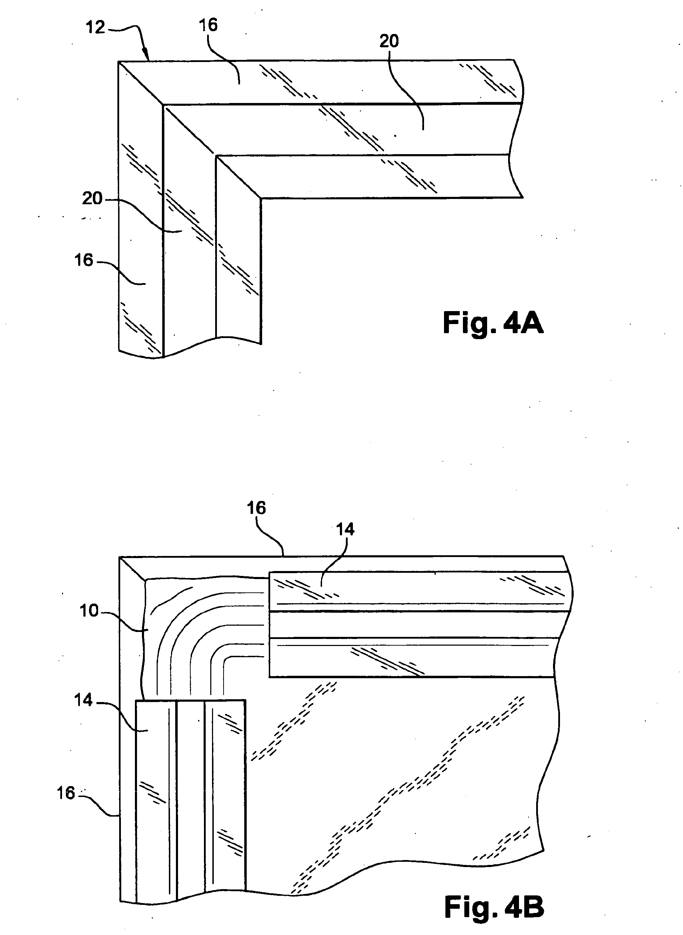

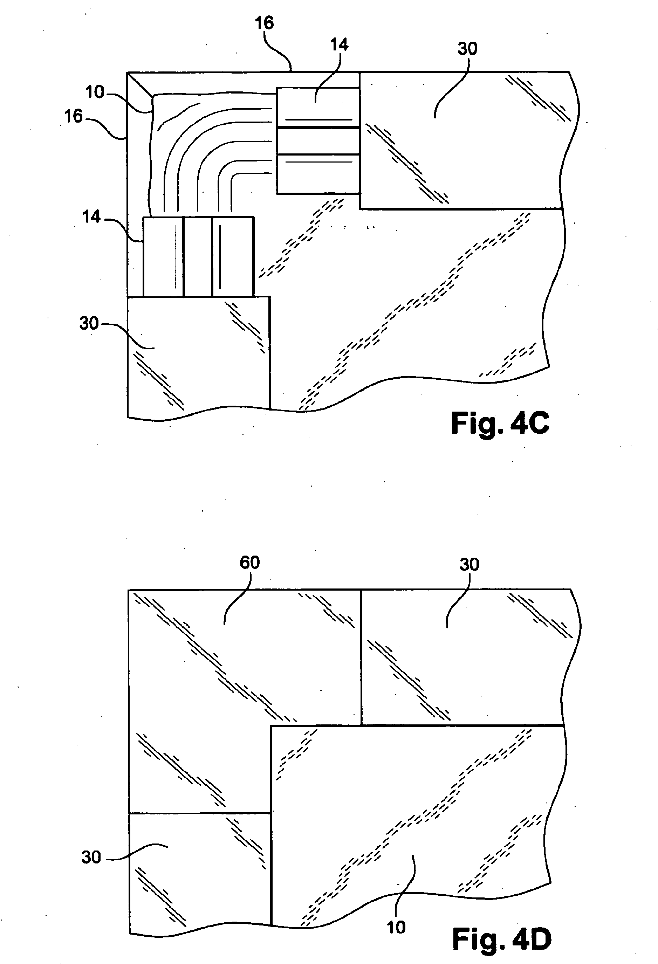

Sur la figure 4A, on a représenté deux tronçons rectilignes 16 assemblés à onglet, susceptibles de former une partie d'un cadre rectangulaire ou carré.

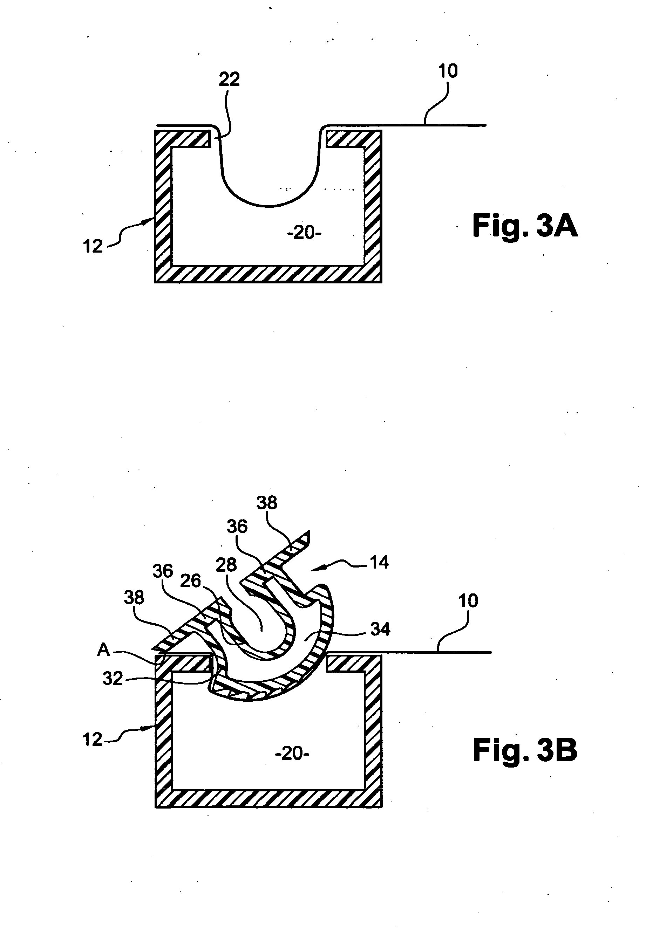

Selon une section transversale illustrée par les figures 1, 3A à 3E, le châssis comprend une face supérieure 18 au niveau de laquelle débouche une rainure 20 via une ouverture 22 dont la largeur d₀ est inférieure à la largeur D₀ de la rainure.

Selon un mode de réalisation préféré, le châssis est réalisé à partir de profilés creux de section sensiblement carrée ou rectangulaire dont la face supérieure comporte une ouverture permettant de faire communiquer l'intérieur et l'extérieur du profilé.

Dans tous les cas, le châssis comprend un logement ou une rainure 20 avec une embouchure ou une ouverture 22 rétrécie.

Selon une section transversale illustrée par la figure 1, l'insert 14 est réalisé à partir d'un profilé ayant une section en forme de oméga. De préférence, l'insert est en matière plastique.

Selon l'invention, l'insert comprend un corps 24 en forme de fer à cheval, susceptible de se déformer de manière élastique et d'être inséré en force dans la rainure 20. Ce corps 24 comprend d'une part, une première paroi 26 délimitant un logement 28 débouchant vers l'extérieur, susceptible de recevoir un élément de maintien 30, et d'autre part, une seconde paroi 32 définissant une surface de retenue susceptible de coopérer avec la rainure 20, un évidement 34 étant ménagé entre les deux parois 26, 32 afin de rendre indépendantes les déformations de chaque paroi 26 ou 32.

Cette configuration permet d'obtenir un effet élastique renforcé qui améliore la résistance de la fixation.

Des zones de jonction 36 sont prévues pour relier la première paroi 26 et la seconde paroi 32 de part et d'autre de l'embouchure du logement 28. Avantageusement, au moins une zone de jonction 36 (de préférence les deux) comprend une aile 38 susceptible de s'étendre de manière sensiblement parallèle à la face supérieure 18 du châssis afin de former la base d'un oméga. Ces ailes 38 permettent un éventuel retrait de l'insert de la rainure et d'éviter que des éléments extérieurs ne pénètrent dans la rainure 20.

L'insert 14 a ainsi une forme en oméga, les ailes 38 formant les pieds du oméga, la première paroi 26 la face intérieure de la partie courbe et la seconde paroi 32 la face extérieure de ladite partie courbe.

Selon un mode de réalisation préféré, la première paroi 26 délimite un logement 28 avec une embouchure 40 rétrécie permettant de retenir l'élément de maintien 30.

L'élément de maintien 30 permet d'éviter que les zones de jonction 36 ne se rapprochent afin de limiter les risques de retrait de l'insert 14 de la rainure 20.

Selon un mode de réalisation préféré, l'élément de maintien 30 est réalisé à partir d'un profilé, de préférence métallique, et comprend d'une part un élément en saillie 42 susceptible de s'insérer en force dans le logement 28, et d'autre part une base 44 susceptible de constituer un capotage afin de protéger l'insert 14, notamment des rayons du soleil. Avantageusement, les extrémités de la base 44 comprennent des rebords 46 permettant d'envelopper l'insert 14, lesdits rebords 46 comprenant de préférence des bourrelets 48 susceptibles de coopérer avec les extrémités des ailes 38 de l'insert 14 de préférence biseautées.

La seconde paroi 32 comprend d'une part une zone rétrécie au niveau des zones de jonction 36 de manière à permettre l'immobilisation de l'insert 14 dans la rainure 20, et d'autre part, une zone large de dimension D1 supérieure à la largeur do de l'embouchure de la rainure 20.

Selon un mode de réalisation, la zone large est constituée d'une portion courbe 50, des décrochements 52 étant ménagés de part et d'autre de ladite portion courbe 50 afin de former la zone rétrécie. Selon les variantes, le décrochement 50 peut être courbe, comme illustré à gauche de l'insert sur les différentes figures, ou comprendre un angle, comme illustré à droite de l'insert, susceptible de matérialiser un point dur.

Avantageusement, la portion courbe 50 comprend au moins un picot 54 permettant de renforcer l'adhérence de la toile sur l'insert.

Selon un mode de réalisation préféré, les picots 54 sont inclinés en direction du décrochement 52 susceptible de constituer un axe de rotation lors de la mise en place de l'insert 14.

Le fonctionnement du dispositif de fixation d'une toile selon l'invention est maintenant décrit au regard des figures 3A à 3E et 4A à 4D.

Le châssis 12 est obtenu en assemblant des tronçons de profilés comprenant une rainure 20 à embouchure rétrécie. De préférence, les tronçons sont disposés bout à bout et découpés de manière adaptée afin d'obtenir une rainure 20 continue le long du châssis, comme illustré sur la figure 4A. Ensuite, la toile 10 est déployée au dessus du châssis, comme illustré sur la figure 3A.

Pour chaque tronçon du châssis, on prépositionne un insert 14 afin que la toile 10 soit pincée au point A entre le châssis 12 et l'aile 38 de l'insert disposée à l'extérieur par rapport à la toile 10 à tendre, comme illustré sur la figure 3B.

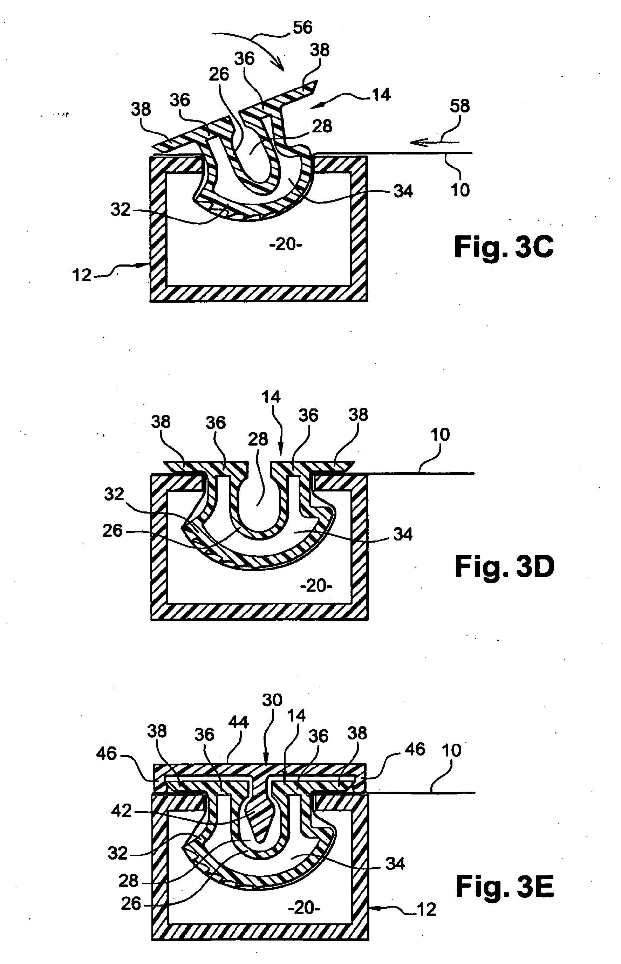

En exerçant une pression sur l'insert 14 de manière à le faire pivoter autour du décrochement 52 comme indiqué par la flèche 56 de la figure 3C, la seconde paroi 32 se déforme de manière élastique pour permettre l'introduction de la zone large de l'insert dans la rainure 20. Lors de sa déformation, la seconde paroi 32 vient en contact avec la première paroi 26 qui tend à empêcher cette déformation et renforce ainsi l'effet élastique de ladite seconde paroi 32.

Lors de ce mouvement de pivotement de l'insert 14, la toile est tendue comme indiqué par la flèche 58 sur la figure 3C. La présence de picots 54 renforce l'adhérence de la toile et permet d'obtenir une meilleure tension. A la fin du mouvement de pivotement, la zone large de l'insert est introduite dans la rainure comme illustré sur la figure 3D. La toile est alors fixée sur le châssis et tendue même en l'absence de l'élément de maintien 30. La présence d'un point dur matérialisé par l'angle du décrochement 52 permet à l'opérateur d'être sûr que l'insert est bien introduit dans la rainure et que la toile est correctement fixée. Avantageusement; comme illustré sur la figure 4B, les inserts 14 sont découpés à partir d'un profilé selon une découpe droite.

L'élément de maintien 30 est introduit dans l'insert 14 de manière à limiter les risques de retrait de l'insert 14 de la rainure 20, comme illustré sur les figures 3E et 4C.

De préférence, les éléments de maintien 30 sont découpés à partir d'un profilé selon une découpe droite et ont une longueur inférieure à celle du tronçon sur lequel ils sont respectivement disposés de manière à ménager un espacement entre eux au niveau des angles et à laisser découverte l'extrémité des inserts 14, comme illustré sur les figures 4C. Dans ce cas, un élément d'angle 60 est clipsé sur les inserts 14 au niveau des angles. Cet agencement permet à partir de découpe simple d'obtenir une finition parfaite au niveau des angles.

Selon une autre variante, le châssis est réalisé à partir d'un profilé comprenant plusieurs rainures 20 comme illustré sur la figure 2. Cet agencement permet à partir d'un même profilé d'obtenir différentes configurations.

Bien entendu, l'invention n'est évidemment pas limitée au mode de réalisation représenté et décrit ci-dessus, mais en couvre au contraire toutes les variantes, notamment en ce qui concerne les dimensions et formes du châssis et la nature de la toile tendue.

## Revendications

1. Dispositif de fixation d'une toile (10) comprenant un châssis (12) de forme polygonale susceptible de recevoir au moins un insert (14), la toile (10) étant maintenue coincée entre le châssis (12) et l'insert (14), le châssis comportant une rainure (20) avec une embouchure (22) rétrécie et l'insert (14) comportant un corps (24) en forme de fer à cheval, susceptible de se déformer de manière élastique et d'être inséré en force dans la rainure (20), **caractérisé en ce que** le corps (24) comprend d'une part, une première paroi (26) délimitant un logement (28) débouchant vers l'extérieur, et d'autre part, une seconde paroi (32) définissant une surface de retenue susceptible de coopérer avec la rainure (20), un évidement (34) étant ménagé entre les deux parois (26, 32) afin de rendre indépendantes les déformations de chaque paroi (26, 32), des zones de jonction (36) étant prévues pour relier la première paroi (26) et la seconde paroi (32) de part et d'autre de l'embouchure du logement (28).

2. Dispositif de fixation d'une toile selon la revendication 1, **caractérisé en ce que** au moins une zone de jonction (36) et de préférence les deux comprennent une aile (38) formant la base d'un oméga.

3. Dispositif de fixation d'une toile selon la revendication 1 ou 2, **caractérisé en ce que** la première paroi (26) délimite un logement (28) avec une embouchure (40) rétrécie permettant de retenir un élément de maintien (30).

4. Dispositif de fixation d'une toile selon la revendication 3, **caractérisé en ce que** l'élément de maintien (30) est réalisé à partir d'un profilé, de préférence métallique, et comprend d'une part un élément en saillie (42) susceptible de s'insérer dans le logement (28), et d'autre part une base (44) susceptible de constituer un capotage afin de protéger l'insert (14).

5. Dispositif de fixation d'une toile selon l'une quelconque des revendications précédentes, **caractérisé en ce que** la seconde paroi (32) comprend une zone large de dimension D1 supérieure à la largeur d₀ de l'embouchure de la rainure (20) constituée d'une portion courbe (50), des décrochements (52) étant ménagés de part et d'autre de ladite portion courbe (50) afin de former une zone rétrécie.

6. Dispositif de fixation d'une toile selon la revendication 5, **caractérisé en ce que** la portion courbe (50) comprend au moins un picot (54) permettant de renforcer l'adhérence de la toile sur l'insert.

7. Dispositif de fixation d'une toile selon la revendication 6, **caractérisé en ce que** les picots (54) sont inclinés en direction du décrochement (52) susceptible de constituer un axe de rotation lors de la mise en place de l'insert (14).

8. Procédé de fixation d'une toile utilisant le dispositif selon l'une quelconque des revendications 1 à 7, **caractérisé en ce qu'**il consiste à :
- former un châssis (12) obtenu en assemblant des tronçons de profilés comprenant une rainure (20) à embouchure rétrécie,
- déployer la toile (10) au dessus du châssis (12),
- pour chaque tronçon du châssis, prépositionner un insert (14) afin que la toile (10) soit pincée entre le châssis (12) et l'aile (28) de l'insert disposée à l'extérieur par rapport à la toile (10) à tendre, et
- exercer une pression sur l'insert (14) de manière à le faire pivoter, la seconde paroi (32) se déformant de manière élastique pour permettre l'introduction de la zone large de l'insert dans la rainure (20).

9. Procédé de fixation d'une toile selon la revendication 8, **caractérisé en ce qu'**après la mise en place de l'insert, un élément de maintien (30) est introduit dans l'insert (14).

10. Procédé de fixation d'une toile selon la revendication 9, **caractérisé en ce que** les éléments de maintien (30) sont découpés à partir d'un profilé selon une découpe droite et ont une longueur inférieure à celle du tronçon sur lequel ils sont respectivement disposés de manière à ménager un espacement entre eux au niveau des angles et à laisser découverte l'extrémité des inserts (14), un élément d'angle (60) étant clipsé sur les inserts (14) au niveau des angles.

## Claims

1. Device for fixing a fabric (10) that comprises a frame (12) of polygonal shape that is able to accommodate at least one insert (14), whereby the fabric (10) is wedged between the frame (12) and the insert (14), the frame comprises a groove (20) with a shrunken mouth (22), and the insert (14) comprises a horseshoe-shaped body (24) that can be deformed elastically and can be inserted forcibly into the groove (20), **characterized in that** the body (24) comprises, on the one hand, a first wall (26) that delimits a housing (28) that opens toward the outside, and, on the other hand, a second wall (32) that defines a retaining surface that can work with the groove (20), whereby a recess (34) is provided between the two walls (26, 32) so as to make the deformations of each wall (26, 32) independent, whereby junction zones (36) are provided to connect the first wall (26) and the second wall (32).

2. Device for fixing a fabric according to claim 1, wherein the junction zones (36) are provided on both side of the mouth of the housing (28).

3. Device for fixing a fabric according to claim 1 or 2, wherein at least one junction zone (36), and preferably two, comprises a wing (38) that forms the base of an omega.

4. Device for fixing a fabric according to one of the claims 1 to 3, wherein the first wall (26) delimits a housing (28) with a shrunken mouth (40) that makes it possible to retain a holding element (30).

5. Device for fixing a fabric according to claim 4, wherein the holding element (30) is made starting from a profile, preferably metallic, and comprises, on the one hand, a projecting element (42) that can be inserted in the housing (28), and, on the other hand, a base (44) that can constitute a cowling so as to protect the insert (14).

6. Device for fixing a fabric according to any of the preceding claims, wherein the second wall (32) comprises a wide zone of size D1 that is greater than the width do of the mouth of the groove (20) that consists of a curved portion (50), offsets (52) being provided on both sides of said curved portion (50) so as to form a shrunken zone.

7. Device for fixing a fabric according to claim 6, wherein the curved portion (50) comprises at least one pin (54) that makes it possible to reinforce the adhesion of the fabric to the insert.

8. Device for fixing a fabric according to claim 7, wherein the pins (54) are inclined in the direction of the offset (52) and are able to constitute an axis of rotation during the installation of the insert (14).

9. Process for fixing a fabric that uses the device according to any of claims 1 to 8, wherein it consists in:
- Forming a frame (12) that is obtained by assembling sections of profiles comprising a groove (20) with a shrunken mouth,
- Deploying the fabric (10) above the frame (12),
- For each section of the frame, pre-positioning an insert (14) so that the fabric (10) is clamped between the frame (12) and the wing (38) of the insert that is placed outside relative to the fabric (10) to be stretched, and
- Exerting pressure on the insert (14) so as to make it pivot, the second wall (32) being deformed elastically to make possible the introduction of the wide zone of the insert in the groove (20).

10. Process for fixing a fabric according to claim 9, wherein after the installation of the insert, a holding element (30) is introduced into the insert (14).

11. Process for fixing a fabric according to claim 10, wherein the holding elements (30) are cut starting from a profile along a straight cut and have a length that is less than that of the section on which they are respectively placed so as to arrange a spacing between them as far as the angles are concerned and so as to leave the end of inserts (14) open, whereby an element of angle (60) is retracted on the inserts (14) at the angles.

## Patentansprüche

1. Vorrichtung zur Befestigung eines Tuchs (10) umfassend eine polygonale Unterkonstruktion (12) zur Aufnahme mindestens eines Einsatzes (14), wobei das Tuch (10) zwischen der Unterkonstruktion (12) und dem Einsatz (14) eingeklemmt ist, wobei die Unterkonstruktion eine Rinne (20) mit einer verengten Mündung (22) aufweist und der Einsatz (14) einen hufeisenförmigen Körper (24) aufweist, der elastisch verformbar ist und in die Rinne (20) eingepresst werden kann, **dadurch gekennzeichnet, dass** der Körper (24) einerseits eine erste, eine nach außen mündende Aufnahme (28) begrenzende Wandung (26) und andererseits eine zweite eine Haltefläche bildende Wandung (32) zum Eingriff in die Rinne (20) umfasst, wobei zwischen den beiden Wandungen (26, 32) eine Ausnehmung (34) eingebracht ist, um die Verformungen der jeweiligen Wandung (26, 32) unabhängig voneinander zu machen, wobei zur Verbindung der ersten Wandung (26) mit der zweiten Wandung (32) Verbindungsbereiche (36) vorgesehen sind.

2. Vorrichtung zur Befestigung eines Tuchs nach Anspruch 1, **dadurch gekennzeichnet, dass** die Verbindungsbereiche (36) zu beiden Seiten der Mündung der Aufnahme (28) vorgesehen sind.

3. Vorrichtung zur Befestigung eines Tuchs nach Anspruch 1 oder 2, **dadurch gekennzeichnet, dass** mindestens ein Verbindungsbereich (36), vorzugsweise die beiden, einen den Steg eines Omega bildenden Flügel (38) umfasst bzw. umfassen.

4. Vorrichtung zur Befestigung eines Tuchs nach einem der Ansprüche 1 oder 3, **dadurch gekennzeichnet, dass** die erste Wand (26) eine Aufnahme (28) mit einer verengten Mündung (40) begrenzt, in der ein Halteelement (30) gehalten werden kann.

5. Vorrichtung zur Befestigung eines Tuchs nach Anspruch 4,
**dadurch gekennzeichnet, dass** das Halteelement (30) aus einem vorzugsweise aus Metall bestehenden Profil hergestellt ist und einerseits ein vorspringendes Element (42) zum Einführen in die Aufnahme (28) und andererseits eine Basis (44) umfasst, wobei die Basis als Abdeckung zum Schutz des Einsatzes (14) dienen kann.

6. Vorrichtung zur Befestigung eines Tuchs nach einem der vorstehenden Ansprüche, **dadurch gekennzeichnet, dass** die zweite Wand (32) einen breiten Bereich umfasst, dessen Abmessung D1 größer ist als die Breite do der Mündung der Rinne (20) und der aus einem gekrümmten Abschnitt (50) besteht, wobei zur Bildung eines verengten Bereichs Rücksprünge (52) zu beiden Seiten des gekrümmten Abschnitts (50) eingebracht sind.

7. Vorrichtung zur Befestigung eines Tuchs nach Anspruch 6, **dadurch gekennzeichnet, dass** der gekrümmte Abschnitt (50) mindestens eine Spitze (54) zur Verstärkung der Haftung des Tuchs am Einsatz umfasst.

8. Vorrichtung zur Befestigung eines Tuchs nach Anspruch 7, **dadurch gekennzeichnet, dass** die Spitzen (54) zum Rücksprung (52) hin geneigt sind, der beim Einsetzen des Einsatzes (14) eine Drehachse zu bilden vermag.

9. Verfahren zur Befestigung eines Tuchs unter Verwendung der Vorrichtung nach einem der Ansprüche 1 bis 8, **dadurch gekennzeichnet, dass** es folgende Schritte aufweist:
- Bilden einer Unterkonstruktion (12), die **dadurch** erzielt wird, dass Profilstücke zusammengefügt werden, welche eine Rinne (20) mit einer verengten Mündung aufweisen,
- Ausfalten des Tuches (10) über die Unterkonstruktion (12),
- Positionieren eines Einsatzes (14) für jedes Stück der Unterkonstruktion, so dass das Tuch (10) zwischen der Unterkonstruktion (12) und dem im Verhältnis zum zu spannenden Tuch (10) außen befindlichen Flügel (38) des Einsatzes eingeklemmt wird, und
- Ausüben eines Drucks auf den Einsatz (14), um diesen zu schwenken, wobei die zweite Wand (32) sich elastisch verformt, um das Einführen des breiten Bereichs des Einsatzes in die Rinne (20) zu ermöglichen.

10. Verfahren zur Befestigung eines Tuchs nach Anspruch 9, **dadurch gekennzeichnet, dass** nach Einsetzen des Einsatzes ein Halteelement (30) in den Einsatz (14) eingebracht wird.

11. Verfahren zur Befestigung eines Tuchs nach Anspruch 10, **dadurch gekennzeichnet, dass** die Halteelemente (30) aus einem Profil entlang eines geraden Schnittes ausgeschnitten sind und eine Länge aufweisen, die geringer ist als die des Stückes, an dem sie jeweils angeordnet sind, so dass zwischen ihnen im Bereich der Winkel ein Abstand entsteht und das Ende der Einsätze (14) frei bleibt, wobei im Bereich der Winkel ein Winkelelement (60) auf die Einsätze (14) eingerastet wird.
